# EUROPEAN PATENT SPECIFICATION

(11) **EP 3 363 725 B1**
(45) Date of publication and mention of the grant of the patent: **12.08.2020**
(21) Application number: 18151578.4
(22) Date of filing: 15.01.2018
(51) Int. Cl.: B62K 19/46, B62J 17/00

(54) **STRADDLED VEHICLE**
GRÄTSCHSITZFAHRZEUG
VÉHICULE À ENFOURCHER

(30) Priority: 17.02.2017 JP 2017027856
(43) Date of publication of application: 22.08.2018
(73) Proprietor: Yamaha Hatsudoki Kabushiki Kaisha, Iwata-shi Shizuoka 438-8501 (JP)
(72) Inventor: TAKAEO, Phanawat, 10540 Samutprakarn (TH)
(74) Representative: Grünecker Patent- und Rechtsanwälte PartG mbB

(56) References cited:
- EP-A1- 0 404 195
- EP-A1- 0 751 063
- WO-A1-2008/123058
- US-A1- 2004 079 573

## Description

The present invention relates to a straddled vehicle.

EP 0 751 063 A1 discloses a vehicle body assembly of a motorcycle which has a storage compartment under the seat and comprises a side cover covering the storage compartment on both sides of the vehicle. The upper edge of the side cover is integrally formed with a groove to receive a lower edge of the seat with an outer wall portion of the groove laterally overlapping the outer side of the seat along the lower edge and an inner wall portion covering the outer surface of the storage compartment EP 0 751 063 A1 discloses the following features of claim 1; a straddled vehicle comprising: a head pipe; a down frame extending downward from the head pipe; a rear frame extending backward from the down frame, the rear frame including a front end and a rear end, the front end being connected to the down frame, the rear end being located in a higher position than the front end; a storage box supported by the rear frame; a seat disposed above the storage box; and a rear cover disposed outward of the storage box in a vehicle width direction, wherein the seat includes a seat sidewall, the seat sidewall overlapping an upper edge of the rear cover in a vehicle side view, the rear cover includes: a guide groove extending in a vehicle back-and-forth direction, the guide groove including a bottom portion, an inner wall and an outer wall, the bottom portion being located below a lower edge of the seat sidewall, the inner wall extending upward from the bottom portion, the inner wall being disposed inward of the lower edge of the seat sidewall in the vehicle width direction, the outer wall extending upward from the bottom portion, the outer wall being disposed outward of the lower edge of the seat sidewall in the vehicle width direction, and a side cover overlapping the bottom portion and the lower edge of the seat sidewall in the vehicle side view, the side cover being disposed outward of the guide groove and of the seat side wall in the vehicle width direction, a front end of the guide groove is located in a lower position than a rear end of the guide groove so that water dropping on the guide groove is led to the front end. Thus, the water tightness of the storage compartment and security against burglars are improved. Moreover, there is a type of straddled vehicle including a rear cover disposed below a seat For example, in a straddled vehicle described in JP 2013 18349 A, the upper edge of the rear cover is located higher than the lower edge of a seat sidewall. A storage box is disposed below the seat The upper edge of the rear cover is covered with the seat sidewall from outside in the vehicle width direction. Additionally, the upper edge of the storage box is located higher than the upper edge of the rear cover. With this configuration, intrusion of foreign objects into the storage box and external access to the storage box are restricted.

A configuration to provide the rear cover with an outer wall can be assumed as a method of further restricting intrusion of foreign objects into the storage box and external access to the storage box. The outer wall is disposed in a close position to the seat sidewall so as to enclose the surroundings of the seat sidewall. However, when the outer wall is disposed to enclose the surroundings of the seat sidewall, the outer wall and an inner wall of the rear cover form a groove in which the sidewall is accommodated. Therefore, even with the configuration to enclose the surroundings of the seat sidewall by the outer wall and the inner wall, there still remains a concern that in rainy weather, water inevitably gets trapped between the outer wall and the inner wall.

It is an object of the present invention to restrict intrusion of foreign objects into a storage box and external access to the storage box in a straddled vehicle, and also, to efficiently discharge water from the straddled vehicle. According to the present invention said object is solved by a straddle vehicle having the features of independent claim 1. Preferred embodiments are laid down in the dependent claims.

A straddled vehicle according to an aspect of the present invention includes a head pipe, a down frame, a rear frame, a storage box, a seat and a rear cover. The down frame extends downward from the head pipe. The rear frame extends backward from the down frame. The rear frame includes a front end and a rear end. The front end is connected to the down frame, and the rear end is located in a higher position than the front end. The storage box is supported by the rear frame. The seat is disposed above the storage box. The rear cover is disposed outward of the storage box in a vehicle width direction.

The seat includes a seat sidewall overlapping an upper edge of the rear cover in a vehicle side view. The rear cover includes a guide groove and a side cover. The guide groove extends in a vehicle back-and-forth direction. The guide groove includes a bottom portion, an inner wall and an outer wall. The bottom portion is located below a lower edge of the seat sidewall. The inner wall extends upward from the bottom portion, and is disposed inward of a lower edge of the seat sidewall in the vehicle width direction. The outer wall extends upward from the bottom portion, and is disposed outward of the lower edge of the seat sidewall in the vehicle width direction. The side cover overlaps the bottom portion and the lower edge of the seat sidewall in the vehicle side view, and is disposed outward of the guide groove in the vehicle width direction.

A front end of the guide groove is located in a lower position than a rear end of the guide groove. The rear cover further includes a first groove portion. The first groove portion extends backward and downward from a position located forward of a front end of the side cover in the vehicle side view. The front end of the guide groove is connected to the first groove portion.

In the straddled vehicle according to the present aspect, the outer wall of the guide groove and the side cover are disposed outward of the seat sidewall in the vehicle width direction. With the configuration, intrusion of foreign objects into the storage box and external access to the storage box can be restricted. Additionally, the front end of the guide groove is located in a lower position than the rear end thereof. Hence, water dropping on the guide groove is led to the front end. The front end of the guide groove is connected to the first groove portion. Hence, the water flows backward and downward along the first groove portion, and is then discharged from the first groove portion to the rear of the vehicle. With the configuration, water can be efficiently discharged from the straddled vehicle.

An upper edge of the side cover may extend to a position located forward of a rear end of the first groove portion and backward of a front end of the first groove portion in the vehicle side view. In this case, a region of the guide groove, ranging to the position that the guide groove is connected to the first groove portion, can be covered with the side cover from outside in the vehicle width direction.

The first groove portion may extend to a front edge of the rear cover in the vehicle side view. In this case, water can be collected extensively on the rear cover and can be efficiently discharged.

The first groove portion may extend to a lower edge of the rear cover in the vehicle side view. In this case, water can be efficiently discharged from the lower edge of the rear cover.

The lower edge of the seat sidewall may include a rear lower edge and a front lower edge. The rear lower edge may extend forward and downward in the vehicle side view. The front lower edge may be located forward of the rear lower edge, and may extend forward and upward in the vehicle side view. The side cover may overlap the rear lower edge in the vehicle side view. In this case, water flowing from the rear lower edge of the seat sidewall can be efficiently discharged.

A front edge of the side cover may extend forward and upward in the vehicle side view. The first groove portion may extend along the front lower edge of the seat sidewall and the front edge of the side cover in the vehicle side view. In this case, water flowing from the front lower edge of the seat sidewall can be efficiently discharged by the first groove portion.

The front end of the side cover may be located forward of a bent portion between the front lower edge and the rear lower edge of the seat sidewall in the vehicle side view. In this case, water can be collected extensively on the seat sidewall and can be efficiently discharged.

An up-and-down directional thickness of the seat sidewall may reduce backward in the vehicle side view. The lower edge of the seat sidewall may include the rear lower edge extending forward and downward in the vehicle side view. The side cover may overlap the rear lower edge in the vehicle side view. The upper edge of the side cover may extend forward and downward in the vehicle side view. In this case, the rear lower edge of the seat sidewall and the upper edge of the side cover tilt forward and downward. Hence, it is easy to set the seating surface to have a gently changing shape, and it is also easy to dispose the upper edge of the side cover below the seating surface.

The straddled vehicle may further include a rear wheel disposed below the seat. A rear end of the side cover may be located backward of a rotational center of the rear wheel in the vehicle side view. In this case, water can be collected extensively on the seat sidewall and can be efficiently discharged.

The side cover may include a second groove portion extending forward and downward. The second groove portion may be communicated with the first groove portion. In this case, water attached to the side cover is led from the second groove portion to the first groove portion, and thus, can be efficiently discharged.

The second groove portion may include an upper groove portion and a lower groove portion. The upper groove portion may extend forward and downward. The lower groove portion may extend forward and downward, and at least part of the lower groove portion may be located lower than the upper groove portion. The upper groove portion and the lower groove portion may be communicated with the first groove portion. In this case, water attached to the side cover is led to the first groove portion by the upper groove portion and the lower groove portion, and thus, can be efficiently discharged.

The outer wall may tilt upward and outward in the vehicle width direction. In this case, the tilt of the outer wall makes it easy for the guide groove to receive water from the seat sidewall.

The outer wall may be provided separately from the side cover. In this case, the outer wall can be easily formed in a tilt shape due to the configuration thereof provided separately from the side cover.

The rear cover may further include a rear cover body. The rear cover body may be disposed below the seat, and may cover the rear frame. The side cover may be provided separately from the rear cover body, and may be attached to the rear cover body. In this case, the shape of the side cover can be easily formed to overlap the lower edge of the seat sidewall.

An upper edge of the inner wall may be located higher than the lower edge of the seat sidewall. An upper edge of the outer wall may be located higher than the lower edge of the seat sidewall. In this case, intrusion of foreign objects into the storage box and external access to the storage box can be further restricted.

### BRIEF DESCRIPTION OF THE DRAWINGS

FIG. 1 is a side view of a straddled vehicle according to a preferred embodiment.
FIG. 2 is an enlarged side view of a rear portion of the straddled vehicle.
FIG. 3 is a cross-sectional view of FIG. 2 taken along line III-III.
FIG. 4 is a cross-sectional view of FIG. 2 taken along line IV-IV.
FIG. 5 is a perspective view of the rear portion of the straddled vehicle.
FIG. 6 is an exploded perspective view of the rear portion of the straddled vehicle.
FIG. 7 is a top view of the rear portion of the straddled vehicle.
FIG. 8 is a top view of the rear portion of the straddled vehicle from which a seat is removed.
FIG. 9 is an exploded perspective view of a first side cover.
FIG. 10 is an exploded perspective view of the first side cover.
FIG. 11 is a cross-sectional view of FIG. 2 taken along line XI-XI.

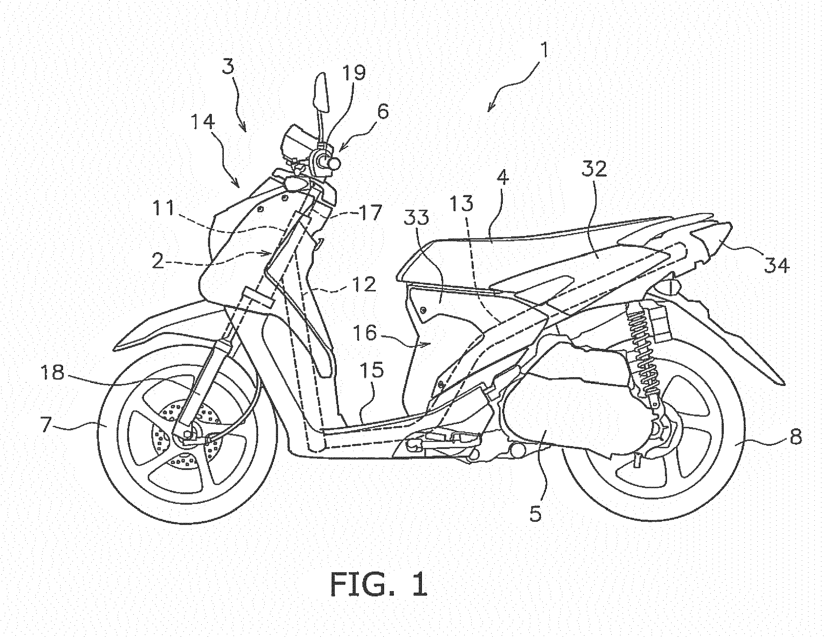

A straddled vehicle according to a preferred embodiment will be hereinafter explained with reference to drawings. FIG. 1 is a side view of a straddled vehicle 1 according to the preferred embodiment. The straddled vehicle 1 according to the present preferred embodiment is a motorcycle. As shown in FIG. 1, the straddled vehicle 1 includes a vehicle body frame 2, a vehicle body cover 3, a seat 4, a power unit 5, a steering device 6, a front wheel 7 and a rear wheel 8.

The vehicle body frame 2 includes a head pipe 11, a down frame 12 and a rear frame 13. The head pipe 11 is disposed in the center of the vehicle in the vehicle width direction. The head pipe 11 extends forward and downward. The down frame 12 extends downward from the head pipe 11. The rear frame 13 is connected to the down frame 12, and extends backward from the down frame 12. The rear end of the rear frame 13 is located in a higher position than the front end of the rear frame 13.

It should be noted that the terms "front", "rear", "right" and "left" are defined as indicating front, rear, right and left directions seen from a driver seated on the seat 4. The term "connection" is not limited to direct connection, and encompasses indirect connection. Additionally, the term "connection" is not limited to a condition that separate members are fixed to each other, and encompasses a condition that a plurality of portions in an integrated member continue to each other.

The term "inward in the vehicle width direction" means directions that approach to the center of the straddled vehicle 1 in the vehicle width direction. The term "outward in the vehicle width direction" means opposite directions to "inward in the vehicle width direction". In other words, the term "outward in the vehicle width direction" means directions that separate from the center of the straddled vehicle 1 in the vehicle width direction.

The vehicle body cover 3 includes a front cover 14, a foot board 15 and a rear cover 16. The front cover 14 covers the head pipe 11 and the down frame 12. The rear cover 16 covers the rear frame 13. The rear cover 16 is disposed below the seat 4. The foot board 15 is disposed between the front cover 14 and the rear cover 16. The foot board 15 is disposed below and in front of the seat 4. The foot board 15 has a flat shape in the vehicle width direction. It should be noted that the foot board 15 may have an upwardly protruding shape in the vehicle width directional middle portion thereof.

The power unit 5 is disposed below the seat 4. The power unit 5 is pivotably supported with respect to the rear frame 13. The power unit 5 includes, for instance, an engine and a transmission. The power unit 5 supports the rear wheel 8 such that the rear wheel 8 is rotatable. The rear wheel 8 is disposed below the seat 4.

The steering device 6 is turnably supported by the head pipe 11. The steering device 6 supports the front wheel 7 such that the front wheel 7 is rotatable. The steering device 6 includes a steering shaft 17, right and left suspensions 18 and a handle member 19. The steering shaft 17 is inserted into the head pipe 11, and extends forward and downward. The handle member 19 is connected to the upper end of the steering shaft 17. The right and left suspensions 18 extend forward and downward. The right and left suspensions 18 support the front wheel 7 such that the front wheel 7 is rotatable. It should be noted that in FIG. 1, only the left suspension 18 is illustrated, but the right suspension 18 has a similar configuration to the left suspension 18.

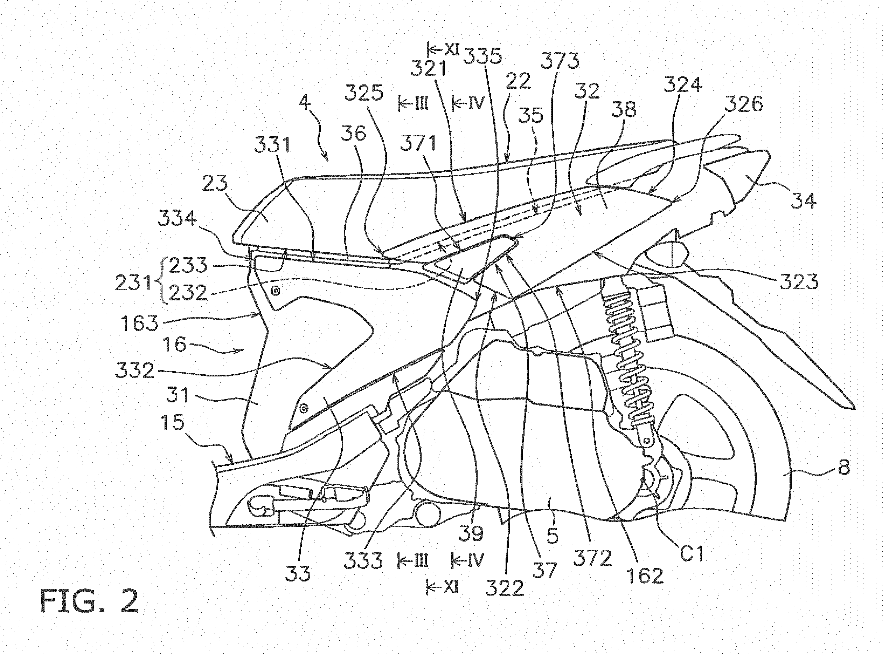

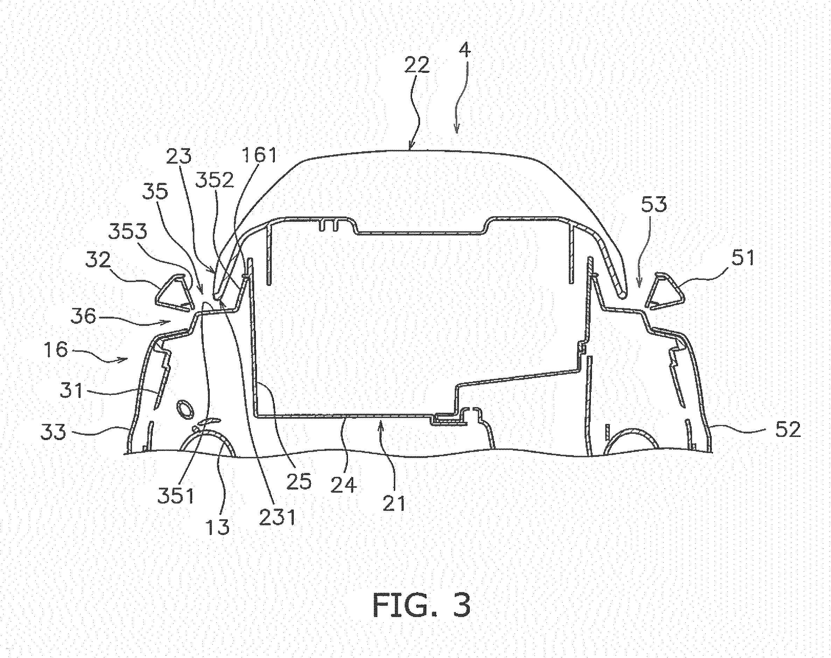

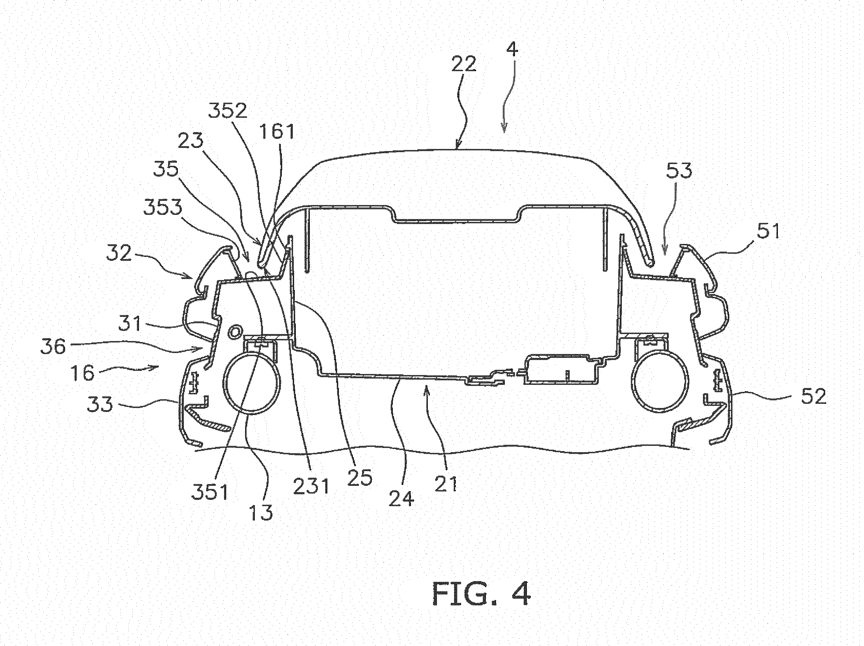

FIG. 2 is an enlarged side view of a rear portion of the straddled vehicle 1. FIG. 3 is a cross-sectional view of FIG. 2 taken along line III-III. FIG. 4 is a cross-sectional view of FIG. 2 taken along line IV-IV. As shown in FIGS. 3 and 4, the straddled vehicle 1 includes a storage box 21. The storage box 21 is supported by the rear frame 13 through a stay (not shown in the drawings). The seat 4 is disposed above the storage box 21. In other words, the seat 4 overlaps the storage box 21 in a top view. It should be noted that the left lateral surface of the rear portion of the straddled vehicle 1 will be hereinafter explained, but the right lateral surface of the rear portion of the straddled vehicle 1 is bilaterally symmetric to the left lateral surface and has a similar configuration to the left lateral surface.

The seat 4 includes a seating surface 22 and a seat sidewall 23. The seat sidewall 23 extends from the seating surface 22 downward and outward in the vehicle width direction. The storage box 21 includes a bottom surface portion 24 and a sidewall 25. The bottom surface portion 24 is disposed below the seating surface 22. The bottom surface portion 24 overlaps the seating surface 22 in the top view. The sidewall 25 extends upward from the bottom surface portion 24.

The seat sidewall 23 overlaps an upper edge 161 of the rear cover 16 in the vehicle side view. A lower edge 231 of the seat sidewall 23 is located lower than the upper edge 161 of the rear cover 16. As shown in FIG. 2, the up-and-down directional thickness of the seat sidewall 23 reduces backward in the vehicle side view. The lower edge 231 of the seat sidewall 23 includes a rear lower edge 232 and a front lower edge 233. The rear lower edge 232 extends forward and downward in the vehicle side view. The front lower edge 233 is located forward of the rear lower edge 232, and extends forward and upward in the vehicle side view.

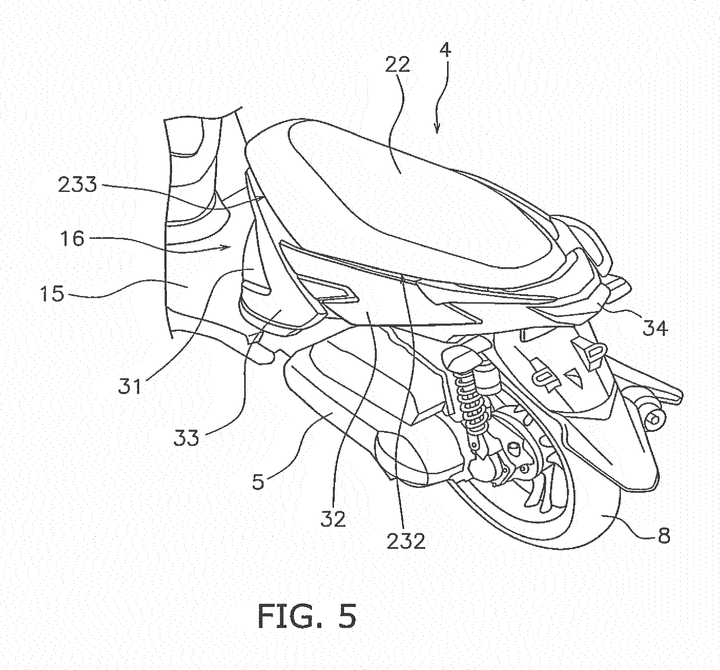

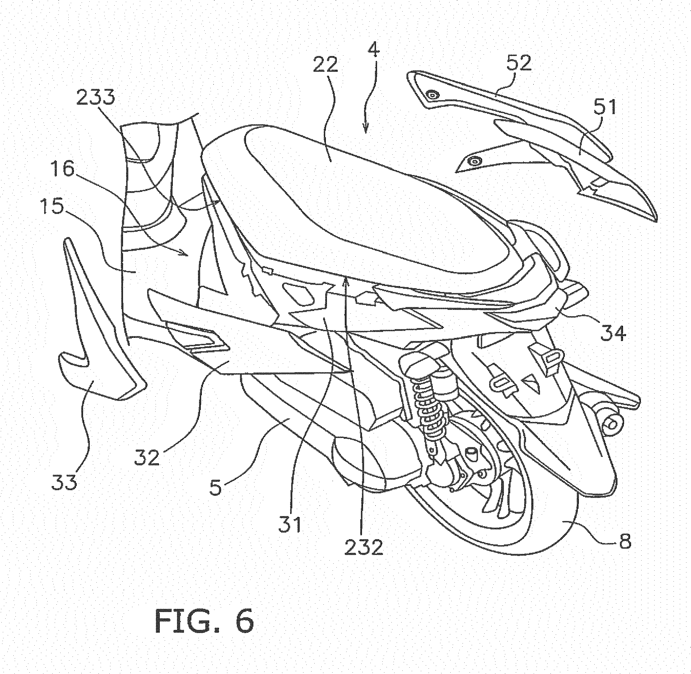

The rear cover 16 is disposed outward of the storage box 21 in the vehicle width direction. FIG. 5 is a perspective view of the rear portion of the straddled vehicle 1. FIG. 6 is an exploded perspective view of the rear portion of the straddled vehicle 1. As shown in FIGS. 2 to 6, the rear cover 16 includes a rear cover body 31, a first side cover 32 and a second side cover 33.

The rear cover body 31 is disposed below the seat 4, and covers the rear frame 13. The rear cover body 31 is disposed outward of the storage box 21 in the vehicle width direction. As shown in FIG. 2, the rear cover body 31 extends to a position backward of the rear end of the seat 4. A tail lamp 34 is attached to the rear end of the rear cover body 31. A front edge 163 of the rear cover body 31 extends upward from the foot board 15 in the vehicle side view. A lower edge 162 of the rear cover body 31 is located higher than the power unit 5 in the vehicle side view. The lower edge 162 of the rear cover body 31 extends backward and upward in the vehicle side view. The first side cover 32 is provided separately from the rear cover body 31, and is attached to the rear cover body 31. The second side cover 33 is provided separately from the rear cover body 31, and is attached to the left lateral surface of the rear cover body 31.

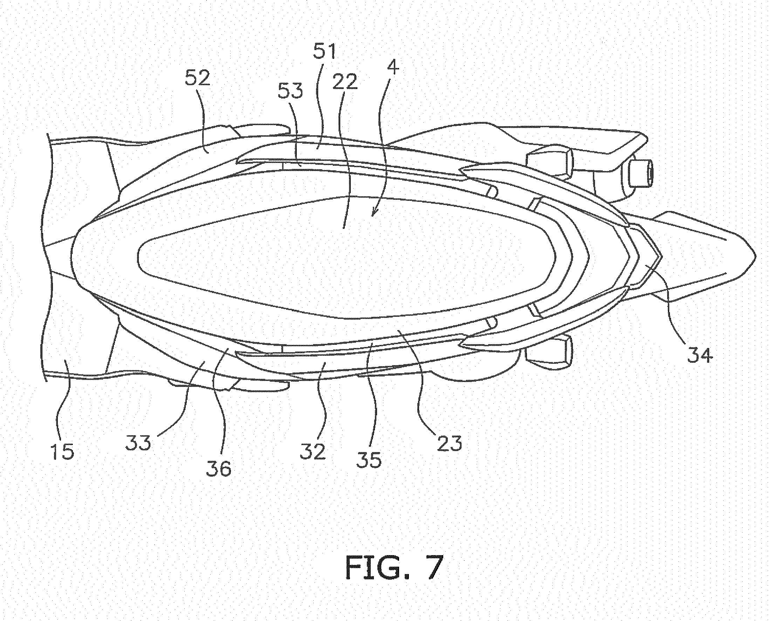

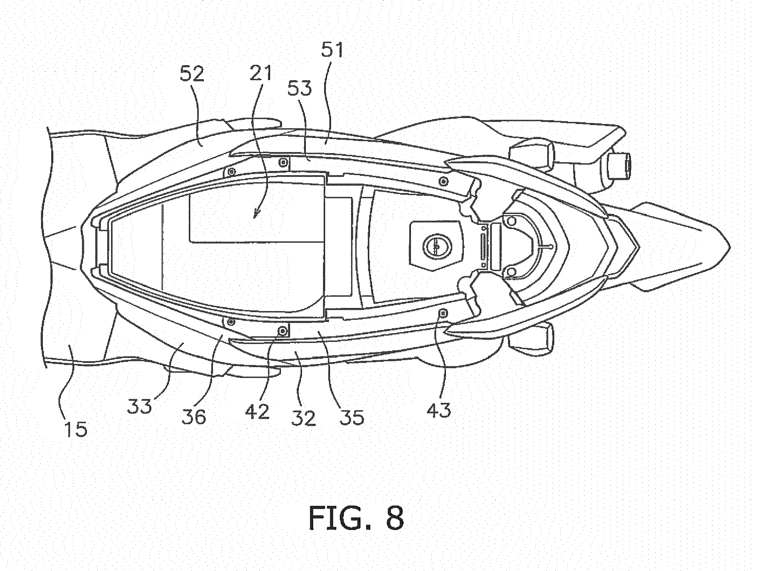

FIG. 7 is a top view of the rear portion of the straddled vehicle 1. FIG. 8 is a top view of the rear portion of the straddled vehicle 1 from which the seat 4 is removed. As shown in FIGS. 2, 7 and 8, the rear cover 16 includes a guide groove 35. The guide groove 35 extends in the vehicle back-and-forth direction. The guide groove 35 has a downwardly recessed shape. The front end of the guide groove 35 is located in a lower position than the rear end of the guide groove 35. The guide groove 35 tilts forward and downward. The guide groove 35 is disposed along the rear lower edge 232 of the seat sidewall 23.

As shown in FIG. 3, the guide groove 35 includes a bottom portion 351, an inner wall 352 and an outer wall 353. The bottom portion 351 is located below the lower edge 231 of the seat sidewall 23. In other words, the bottom portion 351 overlaps the lower edge 231 of the seat sidewall 23 in the top view. The bottom portion 351 extends in the vehicle back-and-forth direction. The guide groove 35 is disposed along the rear lower edge 232 of the seat sidewall 23. The bottom portion 351 tilts downward and outward in the vehicle width direction.

The inner wall 352 extends upward from the bottom portion 351. The inner wall 352 is disposed inward of the lower edge 231 of the seat sidewall 23 in the vehicle width direction. The upper edge of the inner wall 352 is located higher than the lower edge 231 of the seat sidewall 23. The upper edge of the inner wall 352 is connected to the sidewall 25 of the storage box 21. The inner wall 352 tilts upward and inward in the vehicle width direction.

The outer wall 353 extends upward from the bottom portion 351. The outer wall 353 is disposed outward of the lower edge 231 of the seat sidewall 23 in the vehicle width direction. The upper edge of the outer wall 353 is located higher than the lower edge 231 of the seat sidewall 23. The outer wall 353 tilts upward and outward in the vehicle width direction.

The inner wall 352 is integrated with the rear cover body 31. The bottom portion 351 is integrated with the rear cover body 31. The outer wall 353 is provided separately from the rear cover body 31. The outer wall 353 is provided separately from the first side cover 32. It should be noted that the inner wall 352 may be provided separately from the rear cover body 31. The bottom portion 351 may be provided separately from the rear cover body 31. The outer wall 353 may be integrated with the rear cover body 31. The outer wall 353 may be integrated with the first side cover 32.

The first side cover 32 is disposed outward of the guide groove 35 in the vehicle width direction. The first side cover 32 is disposed outward of the outer wall 353 in the vehicle width direction. The first side cover 32 overlaps the bottom portion 351 and the lower edge 231 of the seat sidewall 23 in the vehicle side view. The first side cover 32 overlaps the rear lower edge 232 in the vehicle side view.

As shown in FIG. 2, an upper edge 321 of the first side cover 32 extends backward and upward from a front end 325 (i.e., forward and downward from an upper end) in the vehicle side view. The upper edge 321 of the first side cover 32 tilts in the same direction as the rear lower edge 232 of the seat sidewall 23 in the vehicle side view. A front edge 322 of the first side cover 32 extends backward and downward from the front end 325 (i.e., forward and upward from a lower end) in the vehicle side view. A lower edge 323 of the first side cover 32 extends backward and upward from the lower end of the front edge 322 (forward and downward from a rear end 326) in the vehicle side view. A rear edge 324 of the first side cover 32 extends forward and upward from the rear end 326 in the vehicle side view.

The front end 325 of the first side cover 32 is a connecting portion between the upper edge 321 and the front edge 322 of the first side cover 32. The front end 325 of the first side cover 32 is located forward of a bent portion between the front lower edge 233 and the rear lower edge 232 of the seat sidewall 23 in the vehicle side view. The rear end 326 of the first side cover 32 is a connecting portion between the lower edge 323 and the rear edge 324 of the first side cover 32. The rear end 326 of the first side cover 32 is located backward of a rotational center C1 of the rear wheel 8 in the vehicle side view.

An upper edge 331 of the second side cover 33 extends backward and downward from a front end 334 (forward and upward from a rear end 335). A front portion of the upper edge 331 of the second side cover 33 is disposed along the front lower edge 233 of the seat sidewall 23 in the vehicle side view, A rear portion of the upper edge 331 of the second side cover 33 is disposed along the front edge 322 of the first side cover 32 in the vehicle side view. A front edge 332 of the second side cover 33 has a backwardly recessed shape. A lower edge 333 of the second side cover 33 extends backward and upward from a front end of the lower edge 333 (i.e., forward and downward from the rear end 335 of the lower edge 333).

The second side cover 33 is disposed below the front lower edge 233 of the seat sidewall 23 and the front edge 322 of the first side cover 32 in the vehicle side view. At least part of the second side cover 33 is disposed forward of the first side cover 32. The front end 334 of the second side cover 33 is located forward of the front end 325 of the first side cover 32. The rear end 335 of the second side cover 33 is located backward of the front end 325 of the first side cover 32.

The rear cover 16 includes a first groove portion 36. The first groove portion 36 has a shape recessed inward in the vehicle width direction. The first groove portion 36 extends backward and downward from a position forward of the front end 325 of the first side cover 32 in the vehicle side view. The first groove portion 36 extends along the front lower edge 233 of the seat sidewall 23 and the front edge 322 of the first side cover 32 in the vehicle side view. The first groove portion 36 is provided between the upper edge 331 of the second side cover 33 and the front lower edge 233 of the seat sidewall 23, and is also provided between the upper edge 331 of the second side cover 33 and the front edge 322 of the first side cover 32. The first groove portion 36 extends to the front edge 163 of the rear cover 16 in the vehicle side view. The first groove portion 36 extends to the lower edge 162 of the rear cover 16 in the vehicle side view.

The front end of the guide groove 35 is connected to the first groove portion 36. The front end of the guide groove 35 is connected to the first groove portion 36 in a position located between the front end 334 and the rear end 335 of the second side cover 33. The upper edge 321 of the first side cover 32 extends to a position that is located forward of the rear end of the first groove portion 36 and is also located backward of the front end of the first groove portion 36 in the vehicle side view.

As shown in FIG. 2, the first side cover 32 includes a second groove portion 37. The second groove portion 37 has a shape recessed inward in the vehicle width direction. The second groove portion 37 extends forward and downward. The second groove portion 37 is communicated with the first groove portion 36. The second groove portion 37 includes an upper groove portion 371, a lower groove portion 372 and a connecting groove portion 373.

The upper groove portion 371 extends forward and downward. The lower groove portion 372 extends forward and downward. At least part of the lower groove portion 372 is located lower than the upper groove portion 371. The connecting groove portion 373 connects the rear end of the upper groove portion 371 and the rear end of the lower groove portion 372. The front end of the upper groove portion 371 reaches the front edge 322 of the first side cover 32, and is connected to the first groove portion 36. The front end of the lower groove portion 372 reaches the front edge 322 of the first side cover 32, and is connected to the first groove portion 36. In other words, the upper groove portion 371 and the lower groove portion 372 are communicated with the first groove portion 36.

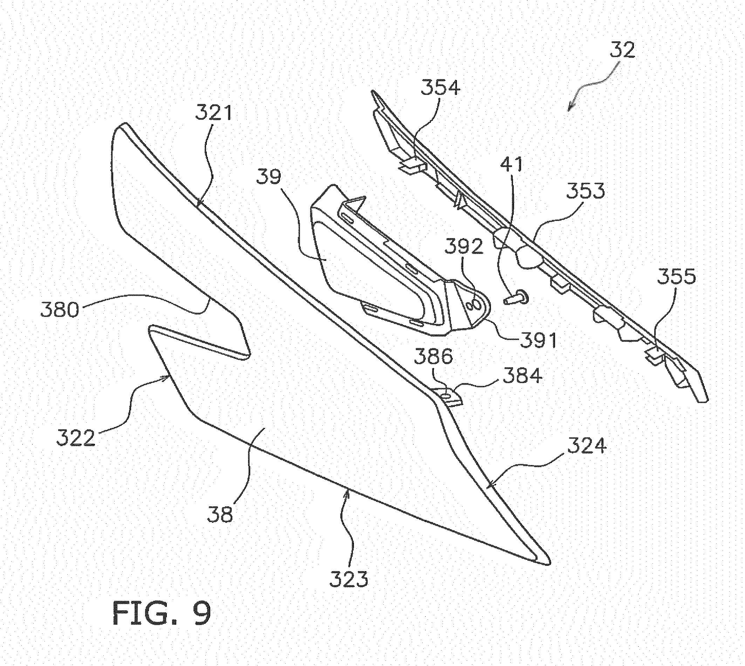

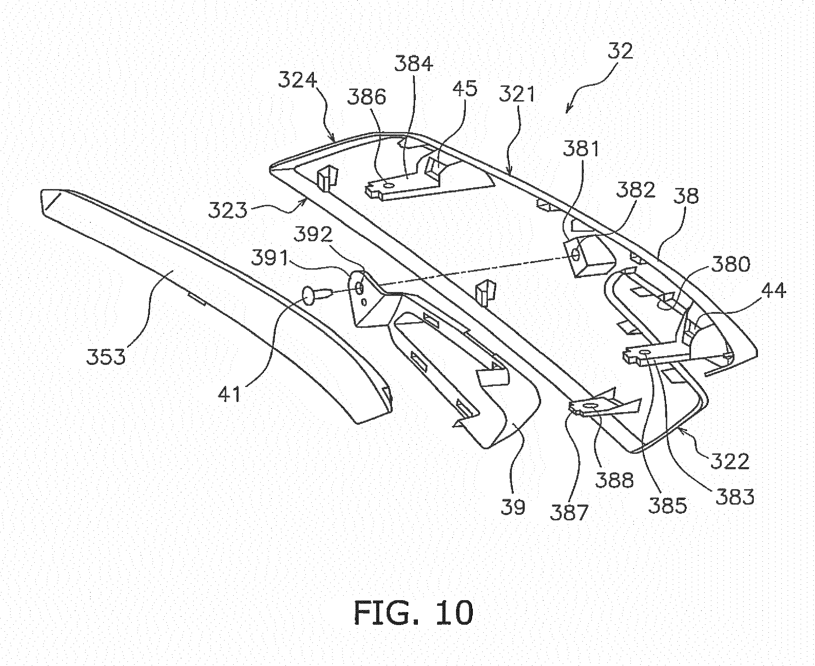

FIGS. 9 and 10 are exploded perspective views of the first side cover 32. As shown in FIGS. 9 and 10, the first side cover 32 includes a first cover portion 38 and a second cover portion 39. The first cover portion 38 includes the upper edge 321, the lower edge 323, the rear edge 324 and part of the front edge 322 of the aforementioned first side cover 32.

The second cover portion 39 is provided separately from the first cover portion 38. The second cover portion 39 is attached to the first cover portion 38. The front edge of the first cover portion 38 includes a recess 380 recessed backward. The second cover portion 39 is attached to the recess 380 of the first cover portion 38. The aforementioned second groove portion 37 is formed between the second cover portion 39 and the first cover portion 38.

As shown in FIG. 10, the first cover portion 38 includes a boss 381. The boss 381 protrudes from the inner surface of the first cover portion 38. The boss 381 includes a hole 382. The second cover portion 39 includes an attachment portion 391. The attachment portion 391 is disposed inward of the first cover portion 38 in the vehicle width direction, and overlaps the first cover portion 38 in the vehicle side view. The attachment portion 391 includes a hole 392. A screw 41 is inserted through the hole 392 of the attachment portion 391 and the hole 382 of the boss 381, whereby the second cover portion 39 is fixed to the first cover portion 38.

The first cover portion 38 includes ribs 383 and 384. The ribs 383 and 384 protrude from the inner surface of the first cover portion 38. The rib 383 includes a hole 385. The rib 384 includes a hole 386. The ribs 383 and 384 are disposed away from each other in the back-and-forth direction. The first cover portion 38 includes a rib 387. The rib 387 is disposed lower than the rib 383. The rib 387 includes a hole 388.

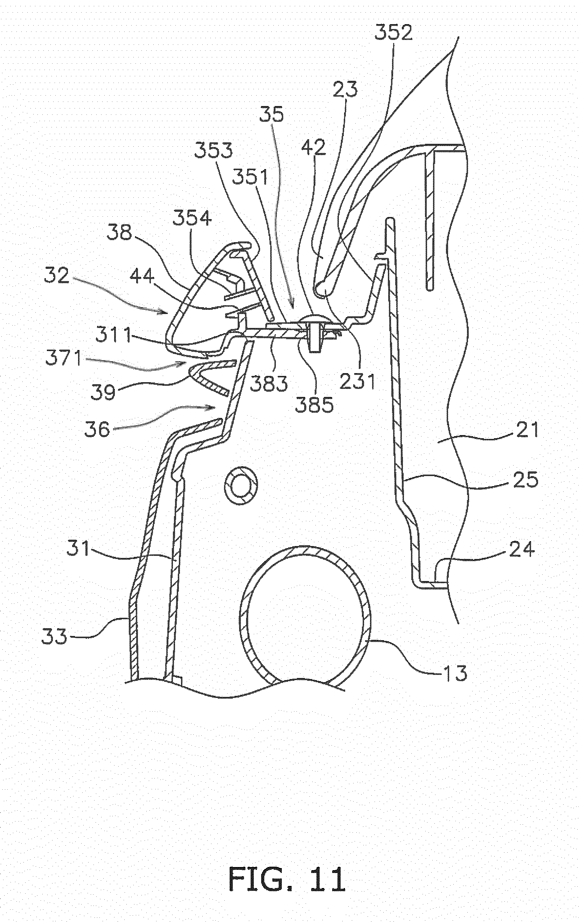

FIG. 11 is a cross-sectional view of FIG. 2 taken along line XI-XI. As shown in FIG. 11, the rib 383 is inserted into a slit 311 provided in the rear cover body 31, and is disposed below the bottom portion 351 of the guide groove 35. Additionally, a screw 42 is inserted through a hole provided in the bottom portion 351 and the hole 385 of the rib 383, whereby the first side cover 32 is fixed to the rear cover body 31.

Similarly to the rib 383, the rib 384 is also disposed below the bottom portion 351 of the guide groove 35. A screw 43 shown in FIG. 8 is inserted through another hole provided in the bottom portion 351 and the hole 386 of the rib 384, whereby the first side cover 32 is fixed to the rear cover body 31. Additionally, a screw is inserted through the hole 388 of the rib 387 and a hole provided in the lower surface of the rear cover body 31, whereby the first side cover 32 is fixed to the rear cover body 31, although not shown in the drawings.

As shown in FIGS. 9 to 11, the outer wall 353 of the guide groove 35 is a member provided separately from the rear cover body 31. The outer wall 353 is a member provided separately from the first side cover 32, and is attached to the first side cover 32. Detailedly, the outer wall 353 is attached to the first cover portion 38.

As shown in FIG. 10, the first cover portion 38 includes openings 44 and 45. As shown in FIG. 9, the outer wall 353 includes protrusions 354 and 355. As shown in FIG. 11, the protrusion 354 is inserted into the opening 44, and is hooked on the edge of the opening 44. On the other hand, the protrusion 355 is inserted into the opening 45, and is hooked on the edge of the opening 45, although not shown in the drawings. With the configurations, the outer wall 353 is fixed to the first cover portion 38.

It should be noted that as shown in FIGS. 6 to 8, a first side cover 51 is attached to the right lateral surface of the rear cover body 31. The first side cover 51 has a shape bilaterally symmetric to the aforementioned first side cover 32. A second side cover 52 is attached to the right lateral surface of the rear cover body 31. The second side cover 52 has a shape bilaterally symmetric to the aforementioned second side cover 33. Additionally, as shown in FIGS. 7 and 8, the straddled vehicle 1 includes a guide groove 53 having a shape bilaterally symmetric to the guide groove 35. The guide groove 35 is disposed leftward of the storage box 21 in the vehicle plan view. The guide groove 53 is disposed rightward of the storage box 21 in the vehicle plan view. Including these portions, the structure of the right lateral surface of the rear portion of the straddled vehicle 1 is similar to that of the left lateral surface of the rear portion of the straddled vehicle 1. Therefore, detailed explanation thereof will not be hereinafter provided.

In the straddled vehicle 1 according to the present preferred embodiment explained above, the outer wall 353 of the guide groove 35 and the first side cover 32 are disposed outward of the seat sidewall 23 in the vehicle width direction. With the configuration, intrusion of foreign objects into the storage box 21 and external access to the storage box 21 can be restricted. Additionally, the front end of the guide groove 35 is located in a lower position than the rear end thereof. Hence, water dropping on the guide groove 35 is led to the front end. The front end of the guide groove 35 is connected to the first groove portion 36. Hence, the water flows backward and downward along the first groove portion 36, and is then discharged from the first groove portion 36 to the rear of the vehicle. With the configuration, water can be efficiently discharged from the straddled vehicle 1.

In the vehicle side view, the upper edge 321 of the first side cover 32 extends to a position that is located forward of the rear end of the first groove portion 36 and is also located backward of the front end of the first groove portion 36. Therefore, a region of the guide groove 35, ranging to the position that the guide groove 35 is connected to the first groove portion 36, can be covered with the first side cover 32 from outside in the vehicle width direction.

The first groove portion 36 extends to the front edge 163 of the rear cover 16 in the vehicle side view. Therefore, water can be collected extensively on the rear cover 16 and can be efficiently discharged.

The first groove portion 36 extends to the lower edge 162 of the rear cover 16 in the vehicle side view. Therefore, water can be efficiently discharged from the lower edge 162 of the rear cover 16.

The first side cover 32 overlaps the rear lower edge 232 in the vehicle side view. Therefore, water, flowing from the rear lower edge 232 of the seat sidewall 23, can be efficiently discharged.

The front edge 322 of the first side cover 32 extends forward and upward in the vehicle side view. The first groove portion 36 extends along the front lower edge 233 of the seat sidewall 23 and the front edge 322 of the first side cover 32 in the vehicle side view. Therefore, water, flowing from the front lower edge 233 of the seat sidewall 23, can be efficiently discharged by the first groove portion 36.

The front end 325 of the first side cover 32 is located forward of the bent portion between the front lower edge 233 and the rear lower edge 232 of the seat sidewall 23 in the vehicle side view. Therefore, water can be collected extensively on the seat sidewall 23 and can be efficiently discharged.

The first side cover 32 overlaps the rear lower edge 232 in the vehicle side view. The upper edge 321 of the first side cover 32 extends forward and downward in the vehicle side view. In other words, the rear lower edge 232 of the seat sidewall 23 and the upper edge 321 of the first side cover 32 tilt forward and downward. Hence, it is easy to set the seating surface 22 to have a gently changing shape, and it is also easy to dispose the upper edge 321 of the first side cover 32 below the seating surface 22.

The rear end 326 of the first side cover 32 is located backward of the rotational center of the rear wheel 8 in the vehicle side view. Therefore, water can be collected extensively on the seat sidewall 23 and can be efficiently discharged.

The first side cover 32 includes the second groove portion 37 extending forward and downward. The second groove portion 37 is communicated with the first groove portion 36. Therefore, water attached to the first side cover 32 is led from the second groove portion 37 to the first groove portion 36, and accordingly, can be efficiently discharged.

The upper and lower groove portions 371 and 372 of the second groove portion 37 are communicated with the first groove portion 36. Therefore, water attached to the first side cover 32 is led to the first groove portion 36 by the upper groove portion 371 and the lower groove portion 372, and accordingly, can be efficiently discharged.

The outer wall 353 tilts upward and outward in the vehicle width direction. Therefore, the tilt of the outer wall 353 makes it easy for the guide groove 35 to receive water from the seat sidewall 23.

The outer wall 353 is provided separately from the first side cover 32. The outer wall 353 can be easily formed in a tilt shape due to the configuration thereof provided separately from the first side cover 32.

The first side cover 32 is provided separately from the rear cover body 31, and is attached to the rear cover body 31. Therefore, the shape of the first side cover 32 can be easily formed to overlap the lower edge 231 of the seat sidewall 23.

The upper edge of the inner wall 352 is located higher than the lower edge 231 of the seat sidewall 23. The upper edge of the outer wall 353 is located higher than the lower edge 231 of the seat sidewall 23. Therefore, intrusion of foreign objects into the storage box 21 and external access to the storage box 21 can be further restricted.

One preferred embodiment has been explained above. However, the present invention is not limited to the aforementioned preferred embodiment, and a variety of changes can be made without departing from the scope of the present invention as defined in the appended claims.

The straddled vehicle 1 is not limited to a motorcycle, and encompasses other types of vehicle such as an all-terrain vehicle. The number of front wheels is not limited to one, and alternatively, may be two or greater. The number of rear wheels is not limited to one, and alternatively, may be two or greater.

## Claims

1. A straddled vehicle (1) comprising:
a head pipe (11);
a down frame (12) extending downward from the head pipe (11);
a rear frame (13) extending backward from the down frame (12), the rear frame (13) including a front end and a rear end, the front end being connected to the down frame (12), the rear end being located in a higher position than the front end;
a storage box (21) supported by the rear frame (13);
a seat (4) disposed above the storage box (21); and
a rear cover (16) disposed outward of the storage box (21) in a vehicle width direction, wherein
the seat (4) includes a seat sidewall (23), the seat sidewall (23) overlapping an upper edge of the rear cover (16) in a vehicle side view,
the rear cover (16) includes:
a guide groove (35) extending in a vehicle back-and-forth direction, the guide groove (35) including a bottom portion (351), an inner wall (352) and an outer wall (353), the bottom portion (351) being located below a lower edge (231) of the seat sidewall (23), the inner wall (352) extending upward from the bottom portion (351), the inner wall (352) being disposed inward of the lower edge (231) of the seat sidewall (23) in the vehicle width direction, the outer wall (353) extending upward from the bottom portion (351), the outer wall (353) being disposed outward of the lower edge (231) of the seat sidewall (23) in the vehicle width direction, and
a side cover (32) overlapping the bottom portion (351) and the lower edge (231) of the seat sidewall (23) in the vehicle side view, the side cover (32) being disposed outward of the guide groove (35) and of the seat sidewall (23) in the vehicle width direction,
a front end of the guide groove (35) is located in a lower position than a rear end of the guide groove (35) so that water dropping on the guide groove (35) is led to the front end,
the rear cover (16) further includes a first groove portion (36), the first groove portion (36) extending backward and downward from a position located forward of a front end (325) of the side cover (32) in the vehicle side view, and
the front end of the guide groove (35) is connected to the first groove portion (36) so that water flows backward and downward along the first groove portion (36), and is then discharged from the first groove portion (36) to the rear of the vehicle (1).

2. The straddled vehicle (1) according to claim 1, wherein an upper edge (321) of the side cover (32) extends to a position located forward of a rear end of the first groove portion (36) and backward of a front end of the first groove portion (36) in the vehicle side view.

3. The straddled vehicle (1) according to claim 1 or 2, wherein the first groove portion (36) extends to a front edge of the rear cover (16) in the vehicle side view.

4. The straddled vehicle (1) according to any of claims 1 to 3, wherein the first groove portion (36) extends to a lower edge of the rear cover (16) in the vehicle side view.

5. The straddled vehicle (1) according to any of claims 1 to 4, wherein
the lower edge (231) of the seat sidewall (23) includes:
a rear lower edge (232) extending forward and downward in the vehicle side view, and
a front lower edge (233) located forward of the rear lower edge (232), the front lower edge (233) extending forward and upward in the vehicle side view, and
the side cover (32) overlaps the rear lower edge (232) in the vehicle side view.

6. The straddled vehicle (1) according to claim 5, wherein
a front edge (322) of the side cover (32) extends forward and upward in the vehicle side view, and
the first groove portion (36) extends along the front lower edge (233) of the seat sidewall (23) and the front edge (322) of the side cover (32) in the vehicle side view.

7. The straddled vehicle (1) according to claim 5 or 6, wherein the front end (325) of the side cover (32) is located forward of a bent portion between the front lower edge (233) and the rear lower edge (232) of the seat sidewall (23) in the vehicle side view.

8. The straddled vehicle (1) according to any of claims 1 to 4, wherein
an up-and-down directional thickness of the seat sidewall (23) reduces backward in the vehicle side view,
the lower edge (231) of the seat sidewall (23) includes a rear lower edge (232) extending forward and downward in the vehicle side view,
the side cover (32) overlaps the rear lower edge (232) in the vehicle side view, and
an upper edge (321) of the side cover (32) extends forward and downward in the vehicle side view.

9. The straddled vehicle (1) according to any of claims 1 to 8, further comprising:
a rear wheel (8) disposed below the seat (4), wherein
a rear end (326) of the side cover (32) is located backward of a rotational center (C1) of the rear wheel (8) in the vehicle side view.

10. The straddled vehicle (1) according to any of claims 1 to 9, wherein
the side cover (32) includes a second groove portion (37), the second groove portion (37) extending forward and downward, and
the second groove portion (37) is communicated with the first groove portion (36).

11. The straddled vehicle (1) according to claim 10, wherein
the second groove portion (37) includes:
an upper groove portion (371) extending forward and downward, and
a lower groove portion (372) extending forward and downward, at least part of the lower groove portion (372) being located in a lower position than the upper groove portion (371), and
the upper groove portion (371) and the lower groove portion (372) are communicated with the first groove portion (36).

12. The straddled vehicle (1) according to any of claims 1 to 11, wherein the outer wall (353) tilts upward and outward in the vehicle width direction.

13. The straddled vehicle (1) according to claim 12, wherein the outer wall (353) is provided separately from the side cover (32).

14. The straddled vehicle (1) according to any of claims 1 to 13, wherein
the rear cover (16) further includes a rear cover body (31), the rear cover body (31) being disposed below the seat (4), the rear cover body (31) covering the rear frame (13), and
the side cover (32) is provided separately from the rear cover body (31), the side cover (32) being attached to the rear cover body (31).

15. The straddled vehicle (1) according to any of claims 1 to 14, wherein
an upper edge of the inner wall (352) is located in a higher position than the lower edge (231) of the seat sidewall (23), and
an upper edge of the outer wall (353) is located in a higher position than the lower edge (231) of the seat sidewall (23).

## Patentansprüche

1. Spreizsitz-Fahrzeug (1), das umfasst:
ein Steuerrohr (11);
einem nach unten gerichteten Rahmen (12), der sich von dem Steuerrohr (11) nach unten erstreckt;
einen hinteren Rahmen (13), der sich von dem nach unten gerichteten Rahmen (12) nach hinten erstreckt, wobei der hintere Rahmen (13) ein vorderes Ende und ein hinteres Ende enthält, das vordere Ende mit dem nach unten gerichteten Rahmen (12) verbunden ist und sich das hintere Ende an einer höheren Position befindet als das vordere Ende;
einen Aufbewahrungskasten (21), der von dem hinteren Rahmen (13) getragen wird;
einen Sitz (4), der oberhalb des Aufbewahrungskastens (21) angeordnet ist; sowie
eine hintere Verkleidung (16), die in einer Fahrzeug-Breitenrichtung außerhalb des Aufbewahrungskastens (21) angeordnet ist, wobei
der Sitz (4) eine Sitz-Seitenwand (23) einschließt und die Sitz-Seitenwand (23), in einer Fahrzeug-Seitenansicht, eine Oberkante der hinteren Verkleidung (16) überlappt,
die hintere Verkleidung (16) umfasst:
eine Führungsnut (35), die sich in einer Fahrzeug-Längsrichtung erstreckt, wobei die Führungsnut (35) einen Bodenabschnitt (351), eine Innenwand (352) und eine Außenwand (353) einschließt, sich der Bodenabschnitt (351) unterhalb einer Unterkante (231) der Sitz-Seitenwand (23) befindet, sich die Innenwand (352) von dem Bodenabschnitt (351) nach oben erstreckt, die Innenwand (352) in der Fahrzeug-Breitenrichtung innerhalb der Unterkante (231) der Sitz-Seitenwand (23) angeordnet ist, sich die Außenwand (353) von dem Bodenabschnitt (351) nach oben erstreckt und die Außenwand (353) in der Fahrzeug-Breitenrichtung außerhalb der Unterkante (231) der Sitz-Seitenwand (23) angeordnet ist,
sowie
eine seitliche Verkleidung (32), die, in der Fahrzeug-Seitenansicht, den Bodenabschnitt (351) und die Unterkante (231) der Sitz-Seitenwand (23) überlappt, wobei die seitliche Verkleidung (32) in der Fahrzeug-Breitenrichtung außerhalb der Führungsnut (35) und der Sitz-Seitenwand (23) angeordnet ist,
ein vorderes Ende der Führungsnut (35) sich an einer niedrigeren Position befindet als ein hinteres Ende der Führungsnut (35), so dass in die Führungsnut (35) tropfendes Wasser zu dem vorderen Ende geleitet wird,
die hintere Verkleidung (16) des Weiteren einen ersten Nutabschnitt (36) einschließt, wobei sich der erste Nutabschnitt (36) von einer Position, die sich, in der Fahrzeug-Seitenansicht, vor einem vorderen Ende (325) der seitlichen Verkleidung (32) befindet, nach hinten und nach unten erstreckt,
und
das vordere Ende der Führungsnut (35) mit dem ersten Nutabschnitt (36) so verbunden ist, dass Wasser entlang des ersten Nutabschnitts (36) nach hinten und unten fließt und dann über den ersten Nutabschnitt (36) zum Heck des Fahrzeugs (1) abgeleitet wird.

2. Spreizsitz-Fahrzeug (1) nach Anspruch 1, wobei sich eine Oberkante (321) der seitlichen Verkleidung (32) bis zu einer Position erstreckt, die sich, in der Fahrzeug-Seitenansicht, vor einem hinteren Ende des ersten Nutabschnitts (36) und hinter einem vorderen Ende des ersten Nutabschnitts (36) befindet.

3. Spreizsitz-Fahrzeug (1) nach Anspruch 1 oder 2, wobei sich der erste Nutabschnitt (36), in der Fahrzeug-Seitenansicht, bis zu einer Vorderkante der hinteren Verkleidung (16) erstreckt.

4. Spreizsitz-Fahrzeug (1) nach Anspruch 1 bis 3, wobei sich der erste Nutabschnitt (36), in der Fahrzeug-Seitenansicht, bis zu einer Unterkante der hinteren Verkleidung (16) erstreckt.

5. Spreizsitz-Fahrzeug (1) nach einem der Ansprüche 1 bis 4, wobei
die Unterkante (231) der Sitz-Seitenwand (23) einschließt:
eine hintere Unterkante (232), die sich, in der Fahrzeug-Seitenansicht nach vorn und nach unten erstreckt, sowie
eine vordere Unterkante (233), die sich vor der hinteren Unterkante (232) befindet, wobei sich die vordere Unterkante (233), in der Fahrzeug-Seitenansicht, nach vorn und nach oben erstreckt, und
die seitliche Verkleidung (32), in der Fahrzeug-Seitenansicht, die hintere Unterkante (232) überlappt.

6. Spreizsitz-Fahrzeug (1) nach Anspruch 5, wobei:
eine Vorderkante (322) der seitlichen Verkleidung (32) sich, in der Fahrzeug-Seitenansicht, nach vorn und nach oben erstreckt und
der erste Nutabschnitt (36) sich, in der Fahrzeug-Seitenansicht, entlang der vorderen Unterkante (233) der Sitz-Seitenwand (23) und der Vorderkante (322) der seitlichen Verkleidung (32) erstreckt.

7. Spreizsitz-Fahrzeug (1) nach Anspruch 5 oder 6, wobei sich das vordere Ende (325) der seitlichen Verkleidung (32), in der Fahrzeug-Seitenansicht, vor einem gebogenen Abschnitt zwischen der vorderen Unterkante (233) und der hinteren Unterkante (232) der Sitz-Seitenwand (23) befindet.

8. Spreizsitz-Fahrzeug (1) nach einem der Ansprüche 1 bis 4, wobei
eine Dicke der Sitz-Seitenwand (23) in vertikaler Richtung, in der Fahrzeug-Seitenansicht, nach hinten abnimmt,
die Unterkante (231) der Sitz-Seitenwand (23) eine hintere Unterkante (232) einschließt, die sich, in der Fahrzeug-Seitenansicht, nach vorn und nach unten erstreckt,
die seitliche Verkleidung (32), in der Fahrzeug-Seitenansicht, die hintere Unterkante (232) überlappt, und
eine Oberkante (321) der seitlichen Verkleidung (32) sich, in der Fahrzeug-Seitenansicht, nach vorn und nach unten erstreckt.

9. Spreizsitz-Fahrzeug (1) nach einem der Ansprüche 1 bis 8, das des Weiteren umfasst:
ein Hinterrad (8), das unterhalb des Sitzes (4) angeordnet ist, wobei
ein hinteres Ende (326) der seitlichen Verkleidung (32) sich, in der Fahrzeug-Seitenansicht, hinter einem Drehmittelpunkt (C1) des Hinterrades (8) befindet.

10. Spreizsitz-Fahrzeug (1) nach einem der Ansprüche 1 bis 9, wobei
die seitliche Abdeckung (32) einen zweiten Nutabschnitt (37) einschließt, wobei sich der zweite Nutabschnitt (37) nach vorn und nach unten erstreckt, und
der zweite Nutabschnitt (37) mit dem ersten Nutabschnitt (36) in Verbindung steht.

11. Spreizsitz-Fahrzeug (1) nach Anspruch 10, wobei:
der zweite Nutabschnitt (37) einschließt:
einen oberen Nutabschnitt (371), der sich nach vorn und nach unten erstreckt, sowie
einen unteren Nutabschnitt (372), der sich nach vorn und nach unten erstreckt, wobei sich wenigstens ein Teil des unteren Nutabschnitts (372) an einer niedrigeren Position befindet als der obere Nutabschnitt (371), und
der obere Nutabschnitt (371) und der untere Nutabschnitt (372) mit dem ersten Nutabschnitt (36) in Verbindung stehen.

12. Spreizsitz-Fahrzeug (1) nach einem der Ansprüche 1 bis 11, wobei die Außenwand (353) in der Fahrzeug-Breitenrichtung nach oben und nach außen geneigt ist.

13. Spreizsitz-Fahrzeug (1) nach Anspruch 12, wobei die Außenwand (353) separat von der seitlichen Verkleidung (32) vorhanden ist.

14. Spreizsitz-Fahrzeug (1) nach einem der Ansprüche 1 bis 13, wobei
die hintere Verkleidung (16) des Weiteren einen Körper (31) der hinteren Verkleidung einschließt, der Körper (31) der hinteren Verkleidung unterhalb des Sitzes (4) angeordnet ist und der Körper (31) der hinteren Verkleidung den hinteren Rahmen (13) abdeckt, und
die seitliche Verkleidung (32) separat von dem Körper (31) der hinteren Verkleidung vorhanden ist, wobei die seitliche Verkleidung (32) an dem Körper (31) der hinteren Verkleidung angebracht ist.

15. Spreizsitz-Fahrzeug (1) nach einem der Ansprüche 1 bis 14, wobei
eine Oberkante der Innenwand (352) sich an einer höheren Position befindet als die Unterkante (231) der Sitz-Seitenwand (23), und
eine Oberkante der Innenwand (353) sich an einer höheren Position befindet als die Unterkante (231) der Sitz-Seitenwand (23).

## Revendications

1. Véhicule à enfourcher (1) comprenant :
un tuyau de tête (11) ;
un cadre inférieur (12) s'étendant vers le bas à partir du tuyau de tête (11) ;
un cadre arrière (13) s'étendant vers l'arrière à partir du cadre inférieur (12), le cadre arrière (13) comprenant une extrémité avant et une extrémité arrière, l'extrémité avant étant reliée au cadre inférieur (12), l'extrémité arrière étant située dans une position plus élevée que l'extrémité avant ;
une boîte de rangement (21) supportée par le cadre arrière (13) ;
un siège (4) disposé au-dessus de la boîte de rangement (21) ; et
un capot arrière (16) disposé à l'extérieur de la boîte de rangement (21) dans le sens de la largeur du véhicule,
où
le siège (4) comprend une paroi latérale de siège (23), la paroi latérale de siège (23) chevauchant un bord supérieur du capot arrière (16) dans une vue latérale du véhicule,
le capot arrière (16) comprend :
une rainure de guidage (35) s'étendant dans une direction avant-arrière du véhicule, la rainure de guidage (35) comprenant une partie inférieure (351), une paroi intérieure (352) et une paroi extérieure (353), la partie inférieure (351) étant située sous un bord inférieur (231) de la paroi latérale du siège (23), la paroi intérieure (352) s'étendant vers le haut à partir de la partie inférieure (351), la paroi intérieure (352) étant disposée vers l'intérieur du bord inférieur (231) de la paroi latérale (23) du siège dans la direction de la largeur du véhicule, la paroi extérieure (353) s'étendant vers le haut à partir de la partie inférieure (351), la paroi extérieure (353) étant disposée vers l'extérieur du bord inférieur (231) de la paroi latérale (23) du siège dans la direction de la largeur du véhicule, et
un capot latéral (32) recouvrant la partie inférieure (351) et le bord inférieur (231) de la paroi latérale du siège (23) dans la vue latérale du véhicule, le capot latéral (32) étant disposé à l'extérieur de la rainure de guidage (35) et de la paroi latérale du siège (23) dans le sens de la largeur du véhicule,
une extrémité avant de la rainure de guidage (35) est située dans une position plus basse qu'une extrémité arrière de la rainure de guidage (35), de sorte que l'eau qui tombe sur la rainure de guidage (35) est dirigée vers l'extrémité avant,
le capot arrière (16) comprend en outre une première partie de rainure (36), la première partie de rainure (36) s'étendant vers l'arrière et vers le bas à partir d'une position située en avant d'une extrémité avant (325) du capot latéral (32) dans la vue latérale du véhicule, et
l'extrémité avant de la rainure de guidage (35) est reliée à la première partie de rainure (36) de manière à ce que l'eau s'écoule vers l'arrière et vers le bas le long de la première partie de rainure (36), et est ensuite évacuée de la première partie de rainure (36) vers l'arrière du véhicule (1).

2. Véhicule à enfourcher (1) selon la revendication 1, où un bord supérieur (321) du capot latéral (32) s'étend vers une position située en avant d'une extrémité arrière de la première partie de rainure (36) et en arrière d'une extrémité avant de la première partie de rainure (36) dans la vue latérale du véhicule.

3. Véhicule à enfourcher (1) selon la revendication 1 ou 2, où la première partie de rainure (36) s'étend jusqu'à un bord avant du capot arrière (16) dans la vue latérale du véhicule.

4. Véhicule à enfourcher (1) selon l'une quelconque des revendications 1 à 3, où la première partie de rainure (36) s'étend jusqu'à un bord inférieur du capot arrière (16) dans la vue latérale du véhicule.

5. Véhicule à enfourcher (1) selon l'une quelconque des revendications 1 à 4, où
le bord inférieur (231) de la paroi latérale du siège (23) comprend :
un bord inférieur arrière (232) s'étendant vers l'avant et vers le bas dans la vue latérale du véhicule, et
un bord inférieur avant (233) situé en avant du bord inférieur arrière (232), le bord inférieur avant (233) s'étendant vers l'avant et vers le haut dans la vue latérale du véhicule, et
le capot latéral (32) chevauche le bord inférieur arrière (232) dans la vue latérale du véhicule.

6. Véhicule à enfourcher (1) selon la revendication 5, où
un bord avant (322) du capot latéral (32) s'étend vers l'avant et vers le haut dans la vue latérale du véhicule, et
la première partie de rainure (36) s'étend le long du bord inférieur avant (233) de la paroi latérale du siège (23) et du bord avant (322) du capot latéral (32) dans la vue latérale du véhicule.

7. Véhicule à enfourcher (1) selon la revendication 5 ou 6, où l'extrémité avant (325) du capot latéral (32) est située en avant d'une partie courbée entre le bord inférieur avant (233) et le bord inférieur arrière (232) de la paroi latérale du siège (23) dans la vue latérale du véhicule.

8. Véhicule à enfourcher (1) selon l'une quelconque des revendications 1 à 4, où
l'épaisseur verticale de la paroi latérale du siège (23) diminue vers l'arrière dans la vue latérale du véhicule,
le bord inférieur (231) de la paroi latérale du siège (23) comprend un bord inférieur arrière (232) s'étendant vers l'avant et vers le bas dans la vue latérale du véhicule,
le capot latéral (32) chevauche le bord inférieur arrière (232) dans la vue latérale du véhicule, et
un bord supérieur (321) du capot latéral (32) s'étend vers l'avant et vers le bas dans la vue latérale du véhicule.

9. Véhicule à enfourcher (1) selon l'une quelconque des revendications 1 à 8, comprenant
en outre :
une roue arrière (8) disposée sous le siège (4), où
une extrémité arrière (326) du capot latéral (32) est située en arrière d'un centre de rotation (C1) de la roue arrière (8) dans la vue latérale du véhicule.

10. Véhicule à enfourcher (1) selon l'une quelconque des revendications 1 à 9, où
le capot latéral (32) comprend une deuxième partie de rainure (37), la deuxième partie de rainure (37) s'étendant vers l'avant et vers le bas, et
la deuxième partie de la rainure (37) est en communication avec la première partie de rainure (36).

11. Véhicule à enfourcher (1) selon la revendication 10, où
la deuxième partie de rainure (37) comprend :
une partie de rainure supérieure (371) s'étendant vers l'avant et vers le bas, et
une partie de rainure inférieure (372) s'étendant vers l'avant et vers le bas, au moins une partie de la partie de rainure inférieure (372) étant située dans une position plus basse que la partie de rainure supérieure (371), et
la partie de rainure supérieure (371) et la partie de la rainure (372) inférieure sont en communication avec la première partie de rainure (36).

12. Véhicule à enfourcher (1) selon l'une quelconque des revendications 1 à 11, où la paroi extérieure (353) s'incline vers le haut et vers l'extérieur dans la direction de la largeur du véhicule.

13. Véhicule à enfourcher (1) selon la revendication 12, où la paroi extérieure (353) est prévue séparément du capot latéral (32).

14. Véhicule à enfourcher (1) selon l'une quelconque des revendications 1 à 13, où
le capot arrière (16) comprend en outre un corps de capot arrière (31), le corps de capot arrière (31) étant disposé sous le siège (4), le corps de capot arrière (31) couvrant le cadre arrière (13), et
le capot latéral (32) est prévu séparément du corps de capot arrière (31), le capot latéral (32) étant fixé au corps de capot arrière (31).

15. Véhicule à enfourcher (1) selon l'une quelconque des revendications 1 à 14, où
un bord supérieur de la paroi intérieure (352) est situé dans une position plus élevée que le bord inférieur (231) de la paroi latérale du siège (23), et
un bord supérieur de la paroi extérieure (353) est situé dans une position plus élevée que le bord inférieur (231) de la paroi latérale du siège (23).
